# EUROPEAN PATENT APPLICATION

(11) **EP 2 996 113 A1**
(43) Date of publication of application: **16.03.2016**
(21) Application number: 15184763.9
(22) Date of filing: 10.09.2015
(51) Int. Cl.: G10L 15/22

(54) **IDENTIFYING UN-STORED VOICE COMMANDS**

(30) Priority: 15.09.2014 US 201414486786
(71) Applicant: Honeywell International Inc., Morris Plains, NJ 07950 (US)
(72) Inventor: PALANISAMY, Prabhu, Morristown, NJ New Jersey 07962-2245 (US); MAHASENAN, Arun Vijayakumari, Morristown, NJ New Jersey 07962-2245 (US)
(74) Representative: Houghton, Mark Phillip

(57) **Abstract**

Devices, methods, and computer-readable and executable instructions for identifying un-stored voice commands are described herein. For example, one or more embodiments include a microphone component configured to capture an un-stored voice command issued by a user and a speech recognition engine. The speech recognition engine can be configured to convert the un-stored voice command to device recognizable text, compare the device recognized text of the un-stored voice command to a plurality of stored voice commands of a voice controlled device, and identify a stored voice command among the plurality of stored voice commands based on the comparison of the device recognizable text of the un-stored voice command to the plurality of stored voice commands.

## Description

### Technical Field

The present disclosure relates to devices, methods, and computer-readable and executable instructions for identifying un-stored voice commands.

### Background

Voice control of a device can allow a user to operate the device without having to touch the device. For instance, voice control can allow for operation of the device without spreading of germs, without having to set down tools and/or equipment, and/or without having to visually see a user interface.Voicecontrolled devices can receive and/or record voice commands in a particular area. For instance, a voice controlled device can recognize and process voice commands received by the device from a user (e.g., a person speaking a voice command).

Somevoice controlled devices can have a plurality of voice commands that are recognized. The plurality of voice commands can be stored on the voice controlled device such that when a user issues (e.g., speaks) a stored voice command, the voice controlled device can perform a function associated with the stored voice command.However, a user may have a difficult time remembering each of the plurality of voice commands and other available commands, related to the application at runtime. For instance, some voice controlled devices can have one hundred or more stored voice commands.

### Brief Description of the Drawings

Figure 1 illustrates a voice controlled device in accordance with one or more embodiments of the present disclosure.
Figure 2 illustrates a diagram of an example of a processfor identifying an un-stored voice command according to one or more embodiments of the present disclosure.
Figure 3 illustrates an example of a displayon a screen of a voice controlled device according to one or more embodiments of the present disclosure.

### Detailed Description

Devices, methods, and computer-readable and executable instructions are described herein. For example, one or more device embodiments include a microphone component configured to capture anun-stored voice command from a user and a speech recognition engine. The speech recognition engine can be configured to convert the un-stored voice command to device recognizable text, compare the device recognized text of the un-stored voice command to a plurality of stored voice commands of a voice controlled device, and identify a stored voice command among the plurality of stored voice commands based on the comparison of the device recognizable text of the un-stored voice command to the plurality of stored voice commands.

A voice controlled device can function by using a speech recognition engine that can decipher a voice command (e.g., user voice) and convert the voice command into a device specific command (e.g., a computing device command), which can then be executed by the device. However, performance of the voice controlled device can be hindered as a result of the voice controlled device not recognizing a voice command issued by the user, which can cause user frustration or place the user in danger, depending on where the voice controlled device is used.

In some instances, a voice controlled device can recognize upwards of one hundred voice commands or more. The recognized voice commands can be stored on the voice controlled device. A user may have a difficult time remembering all of the stored voice commands.In addition, the user may like to view at least some of the stored voice commands to learn about the voice commands that are recognized by the voice controlled device.

In prior voice controlled devices, an un-stored voice command captured by a microphone component can result in the voice controlled device not performing a function and/or outputting an error indication (e.g., displaying and/or broadcasting an error message indicating the un-stored voice command is not recognized.)

To help address the limitations associated with voice controlled devices, devices, methods, and computer-readable and executable instructions are provided for identifying an un-stored voice command. A stored voice command, as used herein, is a voice command that is recognized by the voice controlled device and stored on the voice controlled device. By contrast, an un-stored voice command is a voice command that is not recognized by the voice controlled device and is not stored on the device.

The un-stored voice command can be identified by continuously streaming voice commands captured to a speech recognition engine. The speech recognition engine can convert the captured voice commands to device recognizable text. In response to not recognizing the converted device recognizable text (e.g., the device recognizable text is not an identical match to a stored voice command), the speech recognition engine can perform a keyword search of the device recognizable text of the un-stored voice command to a plurality of stored voice commands. The keyword search can identifying keyword matches of the device recognizable text to the stored voice commands.

Streaming voice commands directly to a speech recognition engine and performing a keyword search for an un-stored voice command, in accordance with the present disclosure, can reduce user frustration as the user that may not remember a particular stored voice command can identify the stored voice command without using a manual and/or asking for help from another person and to the system by issuing a command, such as "What should I speak?" or "Any help commands?". This can reduce the burden on the user to memorize all of the voice commands. Further, the keyword search can reduce false recognition error rates.

In the following detailed description of the present disclosure, reference is made to the accompanying drawings that form a part hereof, and in which is shown by way of illustration how one or more embodiments of the disclosure may be practiced. These embodiments are described in sufficient detail to enable those of ordinary skill in the art to practice the embodiments of this disclosure, and it is to be understood that other embodiments may be utilized and that process, electrical, and/or structural changes may be made without departing from the scope of the present disclosure.

The figures herein follow a numbering convention in which the first digit or digits correspond to the drawing figure number and the remaining digits identify an element or component in the drawing. As will be appreciated, elements shown in the various embodiments herein can be added, exchanged, and/or eliminated so as to provide a number of additional embodiments of the present disclosure. As used herein, "a" or "a number of" refers to one or more. In addition, as will be appreciated, the proportion and the relative scale of the elements provided in the figures are intended to illustrate the embodiments of the present invention, and should not be taken in a limiting sense.

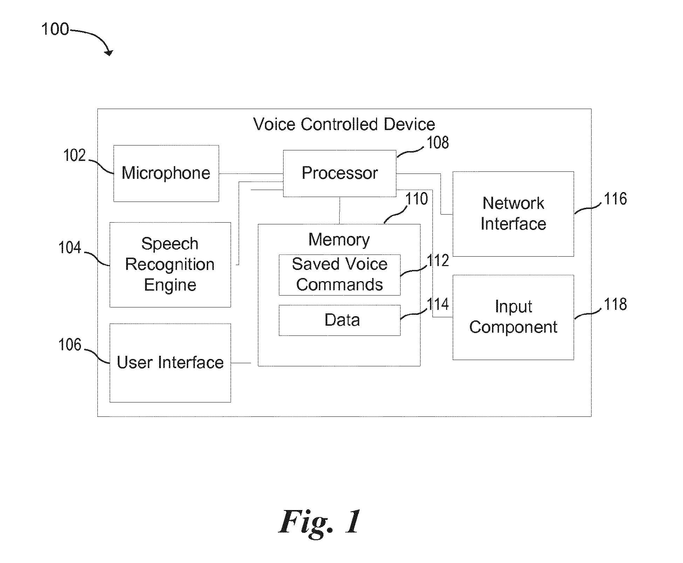

Figure 1 illustrates a voice controlled device 100 in accordance with one or more embodiments of the present disclosure.

The voice controlled device 100 can be, for example, a desktop computer, etc. However, embodiments of the present disclosure are not limited to a particular type of voice controlled device. For example, in some embodiments, voice controlled device 100 can be a television, microwave, refrigerator, security system, fire system, or any other device that can receive, record, recognize, and/or process sound, such as a voice command.

The voice controlled device 100 can be located in an area. For example, the area can be a room, such as a room of a home (e.g., house, apartment, etc.) and/or work environment, for example. However, embodiments of the present disclosure are not limited to a particular type of area in which the voice controlled device 100 may be located or operate.

As shown in Figure 1, the voice controlled device 100 can include a microphone component 102, a speech recognition engine 104, a computing component (e.g., processor 108 and memory 110), a user interface 106, and a network interface 116.The network interface 116 can allow for processing on another networked computing device or such devices can be used to obtain executable instructions for use with various embodiments provided herein.

As illustrated, the computing componentcan include a memory110 and a processor 108 coupled to the memory 110. The memory 110 can be any type of storage medium that can be accessed by the processor to perform various examples of the present disclosure. For example, the memory can be a non-transitory computer readable medium having computer readable instructions (e.g., computer program instructions) stored thereon that are executable by the processor to perform various examples of the present disclosure.

For example, the memory 110 can include a plurality of stored voice commands and/or other data 114 stored thereon. The computing component can be configured to, for example, perform a function associated with a stored voice command (e.g., execute a device specific command to perform a function).

The memory can be volatile or nonvolatile memory. The memory can also be removable (e.g., portable) memory, or non-removable (e.g., internal) memory. For example, the memory can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical disk storage, and/or a magnetic medium such as magnetic cassettes, tapes, or disks, among other types of memory.

A user-interface 106 can include hardware components and/or computer-readable instruction components for a user to interact with a computing component of the voice controlled device 100 using audio commands, text commands, and/or images. A user, as used herein, can include a person issuing (e.g., speaking) a voice command. For instance, the user-interface 106 can receive user inputs and display outputs using a screen (e.g., as discussed further herein).

In various embodiments of the present disclosure, the voice controlled device 100 can include one or more input components 118. A user may enter commands and information into the voice controlled device 100 through the input component 118. Example input components can include a keyboard, mouse and/or other point device, touch screen, microphone, joystick, game pad, scanner, wireless communication, etc. The input components can be connected to the voice controlled device 100 through an interface, such as a parallel port, game port, or a universal serial bus (USB). A screen or other type of display device can also be connected to the system via a user interface 106, such as a video adapter. The screen can display graphical user information for the user.

In some embodiments, the input component 118 of the voice controlled device 100 can be configured to receive an input from the user to add a new voice command to the plurality of stored voice commands. For instance, the new voice command can include a previously un-stored voice command that upon receiving the input from the user is a stored voice command. The new voice command can be added to the stored voice commands file 112, as discussed further herein.

A microphone component 102, as used herein, is an acoustic-to-electronic transducer that can convert sound in air to an electronic signal. For example, the microphone component 102 can capture one or more voice commands issued by a user.

The microphone component 102 can, for example, stream voice commands captured directly to the speech recognition engine 104. Directly streaming captured voice commands can reduce latency of the voice controlled device 100 as compared to prior devices.

The voice commands captured by the microphone component 102 can include stored voice commands and/or un-stored voice commands. A stored voice command, as used herein, is a voice command that is recognized by the voice controlled device 100 and stored within the voice controlled device 100. For example, a stored voice command captured by the microphone component 102 can result in the voice controlled device 100 performing a function (e.g., an action) associated with the stored voice command. By contrast, an un-stored voice command is a voice command that is not recognized by the voice controlled device 100 and/or is not stored on the voice controlled device 100.

Aspeech recognition engine 104, as used herein, can include hardware components and/or computer-readable instruction components to recognize a voice command issued by a user. The speech recognition engine 104can receive signals (e.g., voice commands converted to an electronic signal) from the microphone component 102, and process each of the signals to recognize the voice command issued by the speaker (e.g., determine an instruction).

In some embodiments, the memory 110 and the processor 108 can be a portion of the speech recognition engine 104. An engine, as used herein, can include a combination of hardware and programming that is configured to perform a number of functions described herein. That is, the hardware and/or programming of the speech recognition engine 104 used to perform the number of functions can include the memory 110 and the processor 108. Alternatively, the speech recognition engine 104 can include hardware and/or programming that is separate from the memory 110 and the processor 108. For example, the speech recognition engine 104 can include a separate processor and/or memory, and/or can include logic to perform the number of functions described herein.

For instance, the speech recognition engine 104 can convert a voice command to device recognizable text. The device recognizable text, as used herein, is computer-readable code. That is, the device recognizable text can be recognized by the voice controlled device 100.

If the voice command is a stored voice command, the device recognizable text can include a device specific command. A device specific command can include computer-readable instructions that, when executed by a processing resource, instruct the voice controlled device 100 to perform a function.

For example, the speech recognition engine 104 that can decipher the stored voice command and convert the stored voice command into a device specific command, which can instruct the voice controlled device 100 to perform a function. The voice controlled device 100 can receive a signal associated with the voice command utilizing a microphone component 102, for instance. For example, where the voice controlled device 100 is and/or is associated with anindustrial factory monitoring system, the device specific command can include an instruction to lock a particular door, start a process in the system, turn on the monitoring system, etc.

If the voice command is an un-stored voice command, the device recognizable text can include computer-readable code that is not a device specific command. That is, the device recognizable text may not match (e.g., be identical to) a stored voice command. Each stored voice command can be associated with and/or be a device specific command.

In such embodiments, the speech recognition engine 104 can compare the device recognizable text of the un-stored voice command to a plurality of stored voice commands of the voice controlled device 100. The stored voice commands can be stored, for instance, on memory 110 of the voice controlled device 100.

For example, voice commands recognized by the voice controlled device can be stored in a separate file (e.g., the stored voice commands file 112). The stored voice commands file 112 can include a separate grammar file of the plurality of stored voice commands. An un-stored voice command received can be compared to the stored voice command file 112.

The comparison of the device recognizable text of the un-stored voice command to the plurality of stored voice commands can include a keyword search of the device recognizable text to the plurality of stored voice commands. For instance, the device recognizable text can include one or more keywords that can be compared to one or more of the plurality of stored voice commands (e.g., the stored voice commands file 112).

The plurality of stored voice commands can also include one or more keywords that can be compared to the keywords of the device recognizable text. For instance, the keywords of a stored voice command can include words included in the stored voice command, command paths for multi-part voice commands, and/or functions associated with the stored voice command, among other keywords.

The speech recognition engine 104 can identify one or more stored voice commands among the plurality of voice commands based on the comparison of the device recognizable text of the un-stored command to the plurality of stored voice commands. The identified one or more stored voice commands can include a prediction of the stored voice command the user intended by issuing the un-stored voice command.

An identified stored voice command can include a stored voice command that that matches as least a portion of the device recognizable text. The portion of the device recognizable text can be a keyword, as previously discussed. For instance, the match can include a keyword match of one or more words of the device recognizable text to the stored voice command identified in the stored voice command file 112.

In some embodiments, the identified stored voice command can include a subset of the plurality of stored voice commands of the voice controlled device 100. For example, the each stored voice command in the subset can include a prediction of the stored voice command the user intended by issuing the un-stored voice command. Alternatively and/or in addition, the subset can include one or more command paths for multi-part voice commands that match the device recognizable text, as discussed further herein.

In a number of embodiments, the user interface 106 of the voice controlled device 100 can be used to display the identified stored voice command. For instance, a list containing the identified stored voice command can be displayed on a screen of the voice controlled device 100. The screen can include, for instance, a monitor, a liquid crystal display, a cathode ray tube, a plasma screen, and/or a touch screen, among other screens.

As previously discussed, in some embodiments, the identified stored voice command can include a subset of the plurality of stored voice commands. The subset can include one or more command paths for a multi-part voice commands that matches the device recognizable text of the un-stored voice command. A multi-part command, as used herein, is a stored voice command that has a number of sub-commands (e.g., options) that can be issued to cause a voice controlled device to perform a particular function.

In some embodiments, one or more of the sub-commands can include sub-sub-commands of a stored voice command (e.g., sub-commands of the sub-commands) and one or more of the sub-sub-commands can include sub-sub-sub-commands of the stored voice command (e.g., sub-commands of the sub-sub-commands). A command path can include a number of voice commands issued by a user to get a particular result (e.g., to get the voice controlled device to perform a particular function).

As an example, a user can speak the voice command "Call up Train 3 intermediate precipitator detail" and the voice controlled device 100 can process train 3 intermediate precipitator detail. If the user does not remember the voice command, the user can issue an un-stored voice command "Precipitator detail", the voice controlled device 100 can display a list of stored voice commands that match a keyword of the un-stored voice command and/or display sub-commands of a matching multi-part command, such as "Train 3 intermediate precipitator detail", "Train 1 intermediate precipitator detail", "Train 3 final precipitator detail", and "Read Train 2intermediate precipitator detail". The user can issue a command from the list (which is a stored voice command) that is displayed on the screen.

In some embodiments, the sub-commands and/or subsequent sub-sub-commands can be listed on the screen. For example, the user can issue the non-stored voice command "Precipitator detail" and the voice command device 100 can inform the user of sub-commands of a matching stored voice command through questioning the user such as displaying a question on the screen, playing a pre-recording voice file that includes a question, and/or using a text-to-voice engine (not illustrated by Figure 1). For example, the question can include "Which details Train 1, Train 2, or Train 3?" The user may issue a sub-command in the question, such as speaking "Train 3".

The voice controlled device 100 can continue to question the user until a stored voice command is identified that may result in a function performed when executed. For example, the voice controlled device 100 can question the user as to "Final or intermediate?" and the user can issue a voice command stating "intermediate" and in response, the voice controlled device 100 can identify the function that is to be performed and perform the function, such as processing train 3 intermediate precipitator detail.

In such embodiments, the display of the list can include a list of sub-commands for a matching multi-part command. A subsequent voice command can be received from the microphone component 102 that is issued by the user. The subsequent voice command can include a selected one of the plurality of sub-commands in the list, for example.

In response to the subsequent voice command, the speech recognition engine 104 can revise the displayed list to include at least one of a sub-command of the selected sub-command and a stored voice command associated with the selected sub-command. As such, a user can learn what to speak (e.g., stored voice commands) without any voice command manual or usage instructions from the voice controlled device 100.

Further, informing a user of identified stored voice commands, in accordance with the present disclosure, is not limited to displaying a list of the one or more identified stored voice commands on a screen of the voice controlled device 100. For instance, the voice controlled device 100 can inform the user of one or more voice stored commands and/or question the user by broadcasting pre-recorded voice files using a speaker component and/or using a text-to-speech engine to broadcast computer-generated speech to the user using the speaker component.

A text-to-voice engine, as used herein, is a combination of hardware and programming to convert and broadcast device recognizable text as computer-generated speech using a speaker component. That is, the text-to-voice engine can convert a question, action, and/or identified stored voice command to computer-generated speech and broadcast the speech.

Converting the text to computer-generated speech can include processing device recognizable text (e.g., code) to computer-generated speech. Computer-generated speech can include computer-readable instructions that when executed can be broadcast, by a speaker component, such that a human (e.g., the user) can understand the broadcast. That is, broadcasting of the computer-generated speech can include artificial production of human speech as a message to the user.

The text-to-voice engine can broadcast the converted computer-generated speech using a speaker component of the voice controlled device 100. A speaker component, as used herein, is an electroacoustic transducer that produces sound (e.g., artificial human speech generated by the voice controlled device 100) in response to an electrical audio signal input (e.g., the computer-generated speech).

In a number of embodiments, the computing device can perform a function associated with an identifiedstored voice command and/or the stored voice command that is associated with the selected sub-commandin response to user input. The user input can include capturing the stored voice command from the user using the microphone component 102 and converting the stored voice command to device recognizable text. The device recognizable text, in such an instance, can include a device specific command.

Upon recognition of the voice command, the computing component of the voice controlled device 100 can perform the function requested by the device specific command. For instance, the voice controlled device 100 can adjust its operation (e.g., its operating parameters) based on (e.g., in response to) the stored voice command.

The voice controlled device 100 can be utilized to perform a number of methods. An example method can predict a stored voice command intended by a user issuing an un-stored voice command.

An example method can include capturing a plurality of voice commands from a user using a microphone component 102 of a voice controlled device 100. The plurality of voice commands can include stored voice commands and/or un-stored voice command. The plurality of voice commands can be streamed to a speech recognition engine 104 of the voice controlled device 100.

The method can further include converting the plurality of captured voice commands to device recognizable text. At least a first voice command of the plurality of voice commands can be identified as an un-stored voice command based on the respective device recognizable text. For instance, the first voice command can be identified as an un-stored voice command based on a comparison of the device recognizable text to the plurality of stored voice commands as stored on memory 110 of the voice controlled device 100.

The comparison may identify that the respective device recognizable text of the first voice command does not identically match any of the plurality of stored voice commands. An identical match can, for example, result in the voice controlled device performing a function associated with the stored voice command.

The method can include comparing the respective device recognizable text of the at least first voice command to a file of stored voice commands. For instance, the comparison can be for a keyword match. A keyword match can include a match of one or more words of the respective device recognizable text to one or more of the plurality of stored voice commands in the stored voice commands file 112. As such, the keyword match is not an identical match of the respective device recognizable text to a stored voice command.

A subset of the plurality of stored voice commands 112 can be identified based on the comparison of the respective device recognizable text to the stored voice commands file 112 (e.g., a keyword match). The subset can include one or more stored voice commands.

The user can be informed of the subset of the plurality of stored voice commands. Informing the user of one or more stored voice commands, as used herein, includes providing an indication to the user of the identified one or more stored voice commands. Examples of informing the user can include displaying a list that includes the subset, broadcasting a pre-recorded voice file that includes the subset, and/or using a text-to-speech engine (and a speaker component) to broadcast computer generated speech that includes the subset.

The subset of the plurality of stored voice commands, in various embodiments, can include a plurality of sub-commands of one or more matching stored voice commands (e.g., stored voice commands that are output from the keyword search of one or more words of the device recognized text as compared to the stored voice commands file 112). The subset can be revised, for instance, to include sub-commands of a selected sub-command among the plurality of sub-commands and/or stored voice commands associated with the selected sub-command. For instance, the revision can be in response to user input that selects a sub-command.

In some embodiments, an action associated with a stored voice command in the subset can be performed in response to user input. As previously discussed, the user input can include the user issuing the stored voice command and/or selecting the stored voice command using an input component. Voice recognition can be performed on the signal of the stored voice command issued and the stored voice command can be turned into a device specific command, which can instruct the computing device of the voice controlled device 100 to perform the function associated with the stored command.

In accordance with a number of embodiments, a method can further include identifying at least a second voice command of the plurality of captured voice commands is a stored voice command among the plurality of stored voice command. The identification can include a comparison of the device recognizable text of the second voice command to the plurality of stored voice commands and identify a stored voice command among the plurality that includes an identical match (e.g., the device specific command stored for the particular stored voice command includes the device recognizable text of the second voice command). A function associated with the second voice command can be performed (by the computing component) in response to identifying the second voice command is the stored voice command.

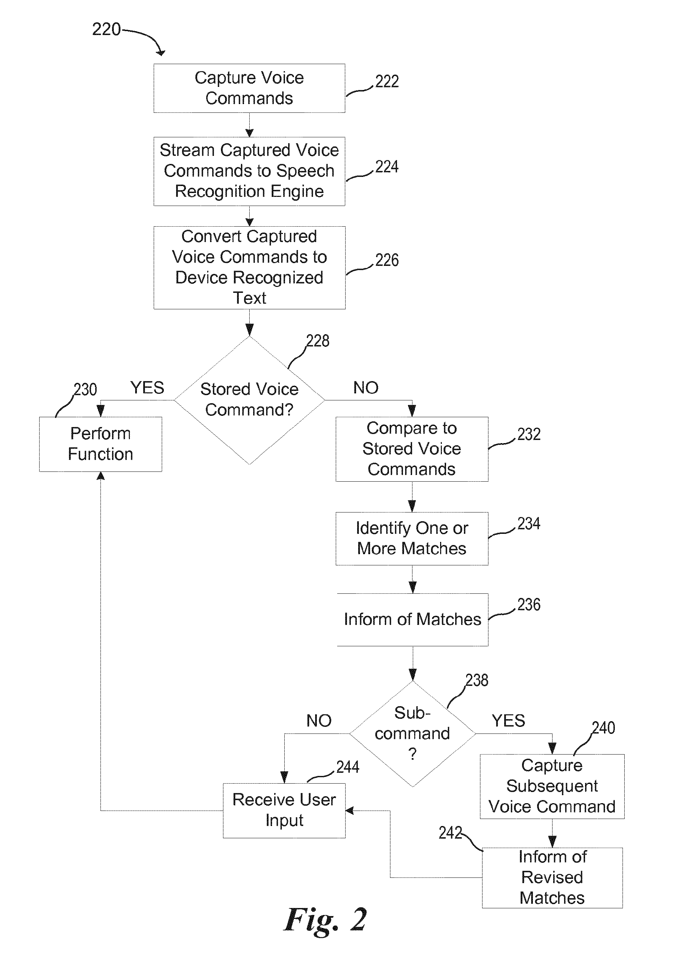

Figure 2 illustrates a diagram of an example of a process 220 for identifying an un-stored voice command according to one or more embodiments of the present disclosure.The process 220 can be performed using a microphone component, a speech recognition engine, and/or a computing component of a voice controlled device.

At block 222, voice commands issued by one or more users can be captured using a microphone component of a voice controlled device. The microphone component, at block 224, can stream the captured voice commands to a speech recognition engine of the voice controlled device. That is, the speech recognition engine can receive voice commands streamed directly from a microphone component.

At block 226, the one or more voice commands can be converted to device recognizable text. A determination can be made, at block 228, whether one of the voice commands is a stored voice command. The determination can include a comparison of the respective device recognizable text of the voice command to the plurality of stored voice commands.

At block 230, in response to determining the voice command is a stored voice command (e.g., identifying an identical stored voice command to the device recognizable text), a function associated with the voice command can be performed.

In response to determining the voice command is an un-stored voice command (e.g., not identifying an identical stored voice command to the device recognizable text), at block 232, the device recognizable text of the un-stored voice command can be compared to a plurality of stored voice commands. The comparison performed at block 232 can include a keyword search of the device recognizable text to a stored voice commands file.

At block 234, one or more stored voice commands among the plurality of stored voice commands can be identified based on the comparison. The identification can include one or more stored voice commands that match the device recognizable text from the keyword search.

The user can be informed of the one or more identified stored voice commands, at block 236. Informing the user, as used herein, can be via text-to-speech and/or a display on a screen. For instance, the user can be informed of the identified stored voice commands by displaying the matching stored voice commands ina list on a screen of the voice controlled device, broadcasting a pre-recorded voice file that includes the matching stored voice commands, and/or using a text-to speech engine and a speaker component of the voice controlled device to broadcast the matching stored voice commands to the user.

In various embodiments, a determination can be made whether the identified stored voice commands have and/or are associated with a plurality of sub-commands, at block 238. In response to determining the identified stored voice commands have sub-commands, a subsequent voice command issued by the user can be captured by the microphone component, at block 240. The subsequent voice command can include a selection of one of the sub-commands associated with the identified stored voice command.

At block 242, in some embodiments, the user can be informed of revised matches. The revised matches can include sub-commands of the selected sub-command (e.g., sub-sub-command of the identified stored voice command) and/or a stored voice command associated with the selected sub-command. For instance, the speech recognition engine can convert the subsequent voice command to device recognizable text and the computing component can perform a function associated with the subsequent voice command (e.g., execute the device recognizable text to perform a function).

In response to determining the one or more identified voice commands do not include sub-commands and/or informing the user of the sub-commands, user input can be received at block 244. The user input can include a user issuing an identified voice command in the list.

At block 230, as previously discussed, a function can be performed. The function can be performed in response to recognizing the voice command (e.g., identifying the voice command is a stored voice command at block 228) and/or a user input 244.

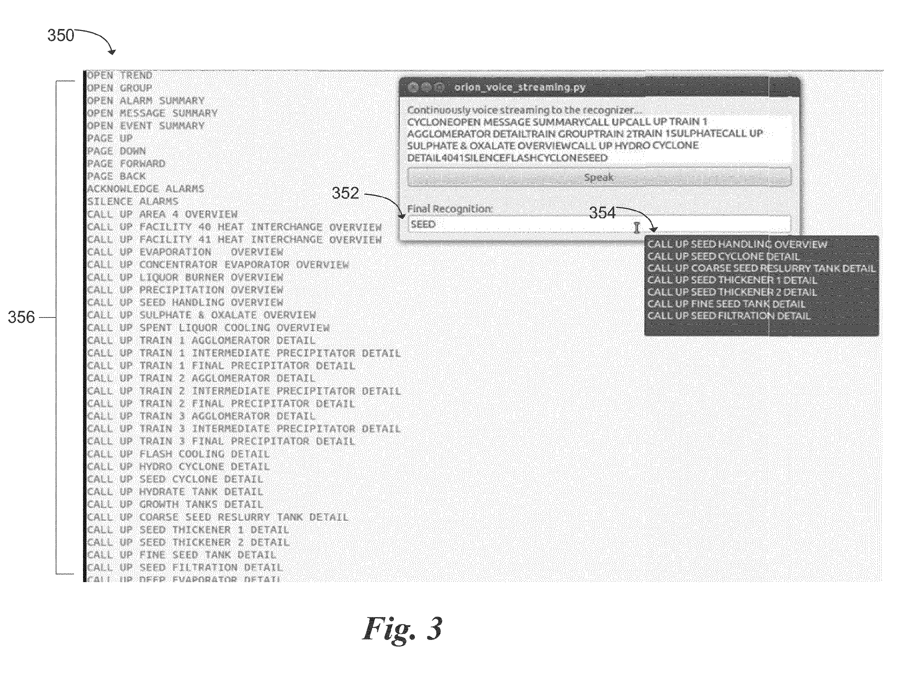

Figure 3 illustrates an example of a display 350 on a screen of a voice controlled device according to one or more embodiments of the present disclosure. Displays on the screen of the voice controlled device can be used to help a user identify a stored voice command intended by the un-stored voice command the user issued and/or to learn stored voice commands without use of a voice command manual and/or usage instructions.

Thevoice control device can display stored voice commands 356 on the screenat runtime, for instance. The displayed stored voice commands 356 can include a list of the plurality of stored voice commands.

A user can issue an un-stored voice command, "Call up seed". The un-stored voice command can be streamed directly to the voice recognition engine and converted to device recognizable text. The device recognizable text can be compared to stored voice commands (e.g., a separate grammar file of the stored voice commands) to identify stored voice commands that match the un-stored voice command. For instance, the comparison can result in a keyword 352 of the un-stored voice command (e.g., "seed") matching a keyword of one or more stored voice commands.

The voice controlled device can inform the user of the one or more stored voice commands. For instance, the voice controlled device can display a list of the subset of stored voice commands that are identified 354. The subset can include the one or more stored voice commands that match the keyword 352 of the un-stored voice command.

Although the present embodiment of Figure 3 illustrates displaying matches on a screen to inform a user of the identified stored voice commands, embodiments in accordance with the present disclosure are not so limited. For instance, a user can be informed by broadcasting a pre-recorded file and/or broadcasting computer-generated speech, as previously discussed in connection with Figure 1.

Further, although not illustrated by Figure 3, the subset of stored voice commands identified 354 can include sub-commands. A user can select one of the sub-commands, by speaking the sub-command or using an input component, and the display on the user interface can be revised to include sub-sub-commands (e.g., sub-commands of the selected sub-command).

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A voice controlled device (100), comprising:
a microphone component (102) configured to capture an un-stored voice command issued by a user; and
a speech recognition engine (104) configured to:
convert the un-stored voice command to device recognizable text;
compare the device recognized text of the un-stored voice command to a plurality of stored voice commands of a voice controlled device; and
identify a stored voice command among the plurality of stored voice commands based on the comparison of the device recognizable text of the un-stored voice command to the plurality of stored voice commands.

2. The device(100) of claim 1, including a user interface (106) to display the identified stored voice command.

3. The device (100) of claim 1, wherein the identification of the stored voice command includes a prediction of the stored voice command (112) the user intended by the un-stored voice command.

4. The device (100) of claim 1, wherein the stored voice command identified includes a subset of the plurality of stored voice commands (112) of the voice controlled device.

5. The device (100) of claim 4, including a user interface (106) to provide a display of a list of sub-commands of the subset of the plurality of stored voice commands (112) to inform the user of the subset.

6. The device (100) of claim 5, wherein the speech recognition engine (104) is configured to receive a subsequent voice command from the user using the microphone component (102), wherein the subsequent voice command includes a selected one of the plurality of sub-commands in the list.

7. The device (100) of claim 1, wherein voice controlled device is configured to perform a function associated with the selected sub-command in response to user input.

8. The device (100) of claim 1,including an input component (118) configured to receive an input from the user to add a new voice command to the plurality of stored voice commands (112).

9. The device (100) of claim 1, wherein the identified stored voice command is a stored voice command among the plurality of stored voice commands (112) that matches at least a portion of the device recognizable text.

10. The device (100) of claim 9, wherein the match includes a keyword match of one or more words of the device recognizable text to the identified stored voice command in a stored voice commands file.
